# EUROPÄISCHE PATENTANMELDUNG

(11) **EP 3 489 537 A1**
(43) Veröffentlichungstag der Anmeldung: **29.05.2019**
(21) Anmeldenummer: 18203475.1
(22) Anmeldetag: 30.10.2018
(51) Int. Cl.: F16D 41/08, F02N 15/06

(54) **FREILAUFEINRICHTUNG FÜR EINEN STARTER UND STARTER FÜR EINE BRENNKRAFTMASCHINE**

(30) Priorität: 22.11.2017 DE 102017127601
(71) Anmelder: SEG Automotive Germany GmbH, 70499 Stuttgart (DE)
(72) Erfinder: CAPEK, Oliver, 70195 Stuttgart (DE)
(74) Vertreter: Steinbauer, Florian

(57) **Zusammenfassung**

Die Erfindung betrifft eine Freilaufeinrichtung (200) für einen Starter (100) für eine Brennkraftmaschine (300), mit einem Innenring (210), einem Außenring (220) und einer zwischen dem Innenring (210) und dem Außenring (220) in einem Keilspalt (222) mit einem sich verjüngenden Ende vorgesehenen Klemmrolle (230), wobei für die Klemmrolle (230) eine Schraubenfeder (240, 240") vorgesehen ist, die in dem Außenring (220) oder dem Innenring abgestützt ist und mittels welcher eine Kraft auf die Klemmrolle (230) in Richtung des sich verjüngenden Endes des Keilspalts (222) ausübbar ist, und wobei die Klemmrolle (230) und die Schraubenfeder (240) in axialer Richtung (A) in Bezug auf den Innenring (210) und den Außenring (220) zwischen zwei Begrenzungselementen (215, 225) eingebracht sind, wobei die Klemmrolle (230) ein Spiel in axialer Richtung (A) in Bezug auf den Innenring (210) und den Außenring (220) aufweist, wobei bei der Schraubenfeder (240, 240") eine maximale Abmessung (ΔA_{A}, ΔA_{R}) wenigstens einer der Klemmrolle (230) zugewandten Endwindung (241, 241") in einer Erstreckungsebene (E) der Endwindung in einer axialen Richtung (A) in Bezug auf den Innenring (210) und den Außenring (220) und/oder einer dazu senkrechten Richtung (R) kürzer ist als eine entsprechende maximale Abmessung (ΔA'_{A}, ΔA'_{R}) wenigstens einer anderen Windung (243, 243") der Schraubenfeder.

## Beschreibung

Die vorliegende Erfindung betrifft eine Freilaufeinrichtung für einen Starter für eine Brennkraftmaschine sowie einen Starter für eine Brennkraftmaschine mit einer solchen Freilaufeinrichtung.

### Stand der Technik

Ein Freilauf bzw. eine Freilaufeinrichtung, auch als Überholkupplung bezeichnet, kann in Startern für Brennkraftmaschinen verwendet werden. Damit ist es möglich, mittels eines Elektromotors des Starters eine Welle mit Starterritzel, welches in einen Zahnkranz der Brennkraftmaschine mittels einer Ausrückeinrichtung eingespurt werden kann, anzutreiben. Sobald jedoch die Brennkraftmaschine selbst in Betrieb ist, kann die Welle bei noch eingespurtem Starterritzel durch den Freilauf problemlos eine höhere Drehzahl als der Elektromotor (ggf. unter Berücksichtigung einer etwaigen Übersetzung) erreichen.

Bei solchen Freilaufeinrichtungen können nun beispielsweise Klemmrollen vorgesehen sein, die mittels geeigneter Schraubenfedern jeweils in einen zugehörigen Keilspalt gedrückt werden, sodass durch eine Verklemmung dieser Klemmrollen eine Drehmomentübertragung zwischen einem Außenring und einem Innenring der Freilaufeinrichtung hergestellt werden kann, solange der nicht durch den Starter angetriebene Ring (entweder Innenring oder Außenring) nicht schneller dreht als der angetriebene Ring. Es liegt dann eine sog. Selbsthemmung vor. Sobald der nicht durch den Starter angetriebene Ring den anderen, durch den Starter angetriebenen Ring in seiner Drehzahl überholt, lösen sich die Klemmrollen gegen die Federkraft der Schraubenfedern.

### Offenbarung der Erfindung

Erfindungsgemäß werden eine Freilaufeinrichtung für einen Starter und ein Starter mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung geht aus von einer Freilaufeinrichtung für einen Starter für eine Brennkraftmaschine, die einen Innenring, einen Außenring und wenigstens eine zwischen dem Innenring und dem Außenring in einem Keilspalt vorgesehene Klemmrolle aufweist. Für die Klemmrolle ist dabei eine Schraubenfeder (auch als Spiralfeder bezeichnet) vorgesehen, die in dem Außenring oder dem Innenring abgestützt ist und mittels welcher eine Kraft auf die Klemmrolle in Richtung des sich verjüngenden Endes des Keilspalts ausübbar ist. Unter einer Schraubenfeder ist dabei insbesondere eine Feder mit gewundenem Federstab zu verstehen. Insbesondere kann es sich dabei auch um eine Druckfeder handeln. Zudem sind die Klemmrolle und die Schraubenfeder in axialer Richtung in Bezug auf den Innenring und den Außenring zwischen zwei Begrenzungselementen, oftmals auch als Mitnehmer bzw. Mitnehmerboden und Haltescheibe bezeichnet, eingebracht, wobei die Klemmrolle ein Spiel in axialer Richtung in Bezug auf den Innenring und den Außenring aufweist. Durch ein solches Spiel ist gewährleistet, dass die Klemmrolle störungsfrei in der Führungseinrichtung geführt werden kann und eine ordnungsgemäße Selbsthemmung, wie sie eingangs beschrieben wurde, möglich ist. Es versteht sich, dass eine solche Freilaufeinrichtung auch mehrere solcher Klemmrollen, dann mit jeweils zugehöriger Schraubenfeder und zugehörigem Keilspalt, aufweisen kann. Diese mehreren Klemmrollen können dann vorzugsweise auch gleichmäßig über einen Umfang des Innenrings bzw. Außenrings verteilt sein, um eine gleichmäßige Hemmung zu erreichen.

Erfindungsgemäß ist nun vorgesehen, dass bei der Schraubenfeder - bzw. im Falle mehrerer Schraubenfedern und Klemmrollen zumindest bei einer dieser Schraubenfedern, vorzugsweise jedoch bei mehreren oder besonders bevorzugt bei allen davon - eine maximale Abmessung wenigstens einer der Klemmrolle zugewandten Endwindung in einer Erstreckungsebene in axialer Richtung in Bezug auf den Innenring und den Außenring (also in der Richtung entlang einer Rotationsachse der Freilaufeinrichtung) und/oder in einer Richtung senkrecht dazu (d.h. in einer Richtung, die in dieser Erstreckungsebene liegt und senkrecht zu dieser axialen Richtung ist) kürzer ist als eine entsprechende maximale Abmessung wenigstens einer anderen Windung der Schraubenfeder. Zu der Richtung senkrecht zur axialen Richtung sei an dieser Stelle angemerkt, dass es sich hierbei insbesondere um die radiale Richtung in Bezug auf den Innenring und den Außenring handeln kann. Je nach konkreter Anordnung der Schraubenfeder in der Freilaufeinrichtung kann dieses senkrechte Richtung aber auch gegenüber der radialen Richtung verkippt sein, weist jedoch bei einer funktionsfähigen Freilaufeinrichtung immer eine Komponente in der radialen Richtung auf. Sofern im Folgenden von der axialen oder der dazu senkrechten Richtung die Rede ist, wird immer auf die vorstehenden definierten Richtungen Bezug genommen. Bei der Erstreckungsebene handelt es sich insbesondere um eine Ebene senkrecht zur Längsachse der Schraubenfeder.

Bei solchen Freilaufeinrichtungen ist es bislang üblich, dass alle Windungen der Schraubenfeder (in der Erstreckungsrichtung) die gleichen Abmessungen aufweisen, und zwar jeweils sowohl in axialer als auch der dazu senkrechten Richtung. Da die Klemmrolle in der axialen Richtung zwischen den beiden Begrenzungselementen ein Spiel aufweist und da die Klemmrolle am Rand ihrer Zylinderfläche üblicherweise einen Übergangsradius aufweist, der von derselben Größenordnung wie die Drahtdicke der Feder ist, führt dies dazu, dass sich die an der Klemmrolle anliegende Endwindung der Schraubenfeder in dem sich durch das Spiel zwischen Klemmrolle und Begrenzungselementen bildenden Spalt (dann zwischen einem der Begrenzungselemente und der Klemmrolle) verklemmen kann. Dies ist nachteilig für die ordnungsgemäße Funktion der Freilaufeinrichtung, da unter Umständen die Selbsthemmung oder der Freilauf nicht mehr gewährleistet werden können. Zudem können dadurch die Schraubenfeder, die Klemmrolle und auch die Begrenzungselemente an den betreffenden Stellen übermäßig stark abgenutzt werden. Je nach konkreter Ausgestaltung kann dies auch für Bereiche der Endwindung bzw. der Klemmrolle im Bereich zwischen Klemmrolle und anliegender Fläche von Innenring bzw. Außenring gelten.

Mit der vorgeschlagenen Freilaufeinrichtung bzw. der dabei verwendeten Schraubenfeder tritt dieses Problem nun nicht mehr auf oder wird zumindest gemindert. Indem nämlich die der Klemmrolle zugewandte Endwindung der Schraubenfeder eine kürzere maximale Abmessung als eine der anderen Windungen (insbesondere der unmittelbar benachbarten, d.h. "vorletzten" Windung) der Schraubenfeder aufweist, liegt die Schraubenfeder mit dieser Endwindung zumindest auf einer Seite bzw. an einem Ende in Bezug auf die jeweilige (also axiale und/oder dazu senkrechte) Richtung nicht an dem jeweiligen Begrenzungselement bzw. der jeweiligen Fläche von Innen- oder Außenring an. Ein ungewünschtes Verklemmen dieser Endwindung mit der Klemmrolle wird damit zumindest an der betreffenden Stelle verhindert. Damit kann eine möglichst ordnungsgemäße Funktion der Freilaufeinrichtung erreicht werden.

Besonders bevorzugt ist es insofern auch, wenn bei der Schraubenfeder die maximale Abmessung wenigstens der der Klemmrolle zugewandten Endwindung in der Erstreckungsebene in der axialen und in der dazu senkrechten Richtung kürzer ist als eine entsprechende maximale Abmessung wenigstens einer anderen Windung der Schraubenfeder. Damit kann ein Verklemmen in beiden erwähnten Richtungen verhindert werden.

Besonders bevorzugt ist auch, wenn bei der Schraubenfeder wenigstens die der Klemmrolle zugewandte Endwindung in der Erstreckungsebene in der axialen und/oder der dazu senkrechten Richtung an jeweils beiden Seiten (also rechts und links bzw. oben und unten, bezogen auf die Federmittelachse) von wenigstens einer anderen Windung der Schraubenfeder überragt wird. Damit ist gewährleistet, dass die Endwindung auf keiner der beiden Seiten in der jeweiligen (also der axialen und/oder dazu senkrechten) Richtung an dem jeweiligen Begrenzungselement bzw. der jeweiligen Fläche von Innen- oder Außenring anliegt. Damit kann ein ungewünschtes Verklemmen besonders effektiv verhindert werden.

Vorteilhafterweise ist die Schraubenfeder zwischen den Begrenzungselementen mit oder ohne Spiel angeordnet. Ohne Spiel weist die Schraubenfeder einen stabilen Halt in der Freilaufeinrichtung auf, mit Spiel hingegen lässt sie sich einfacher montieren bzw. einbringen und wird in ihrer Bewegung nicht durch an den Führungsflächen wirkende Kräften behindert. Die Fixierung wird dabei von den anderen Windungen, nicht von den Endwindungen geleistet.

Vorzugsweise sind bei der Schraubenfeder die maximalen Abmessungen aller Windungen außer den Endwindungen (oder aller Windungen außer der der Klemmrolle zugewandten Endwindung) in der Erstreckungsebene in der axialen und/oder in der dazu senkrechten Richtung gleich. Damit kann ebenso ein besonders stabiler Halt der Schraubenfeder erreicht werden, insbesondere wenn die Schraubenfeder kein Spiel aufweist.

Es ist zudem von Vorteil, wenn bei der Schraubenfeder die maximale Abmessung sowohl der der Klemmrolle zugewandten Endwindung als auch der der Klemmrolle abgewandten Endwindung in der (jeweiligen) Erstreckungsebene in der axialen und/oder in der dazu senkrechten Richtung kürzer ist als die entsprechende maximale Abmessung wenigstens einer anderen Windung der Schraubenfeder. Bei der der Klemmrolle abgewandten Endwindung, also derjenigen Endwindung, mittels welcher die Schraubenfeder an dem Innenring oder Außenring abgestützt ist, kann zwar keine solche unerwünschte Verklemmung auftreten, wie dies bei der der Klemmrolle zugewandten Endwindung der Fall ist. Allerdings muss bei derart ausgebildeten Schraubenfedern beim Zusammenbau der Freilaufeinrichtung, und dort insbesondere dem Einsetzen der Schraubenfeder, nicht auf die Orientierung der Schraubenfeder geachtet werden, da dann jede der beiden Endwindungen, wenn sie auf Seiten der Klemmrolle vorgesehen wird, das unerwünschte Verklemmen verhindert. Zudem erlaubt eine kürzere Endwindung auf der der Klemmrolle abgewandten Seite eine günstigere Gestaltung des Außenrings (Mitnehmer) hinsichtlich der Kerbspannungen (der Übergangsradius kann größer gewählt werden, ohne dass eine Wandstärke dünner ausgebildet werden müsste).

Vorzugsweise weisen die Windungen der Schraubenfeder eine elliptische oder superelliptische (Lamesche Kurve) Form in der Erstreckungsebene auf. Damit kann einerseits der in der Erstreckungsebene in der axialen Richtung länglichen Ausdehnung der Klemmrollen und andererseits einer einfachen Herstellung der Schraubenfedern aufgrund der Rundungen an den Enden in der axialen Richtung Rechnung getragen werden.

Vorteilhafterweise ist bei der Schraubenfeder die maximale Abmessung wenigstens der der Klemmrolle zugewandten Endwindung in der Erstreckungsebene in der axialen und/oder in der dazu senkrechten Richtung kürzer als eine entsprechende (d.h. in der jeweiligen Richtung) maximale Abmessung der zugehörigen Klemmrolle. Damit kann ebenfalls erreicht werden, dass unerwünschte Verklemmungen vermieden werden, insbesondere dann, wenn die Schraubenfeder ohne Spiel vorgesehen ist.

Vorteilhafterweise beträgt bei der Schraubenfeder die maximale Abmessung wenigstens der der Klemmrolle zugewandten Endwindung in der Erstreckungsebene in der axialen und/oder in der dazu senkrechten Richtung höchstens 90%, bevorzugt höchstens 80% und besonders bevorzugt höchstens 75%, der entsprechenden maximalen Abmessung der wenigstens einen anderen Windung der Schraubenfeder. Dies kann insbesondere auch für sämtliche anderen Windungen außer der bzw. den Endwindungen, oder in Bezug auf einen Durchschnitt der entsprechenden maximalen Abmessungen dieser anderen Windungen gelten.

Gegenstand der Erfindung ist weiterhin ein Starter für eine Brennkraftmaschine mit einer erfindungsgemäßen Freilaufeinrichtung. Besonders bevorzugt weist der Starter dabei einen Elektromotor, mittels dessen der Außenring der Freilaufeinrichtung antreibbar ist, und ein Starterritzel, das mit dem Innenring verbunden oder gekoppelt ist, auf. Insbesondere kann das Starterritzel dabei auch integral mit dem Innenring verbunden bzw. ausgebildet sein.

Hinsichtlich der Vorteile sowie bevorzugten Ausgestaltungen des Starters sei zur Vermeidung von Wiederholungen auf obige Ausführungen zur Freilaufeinrichtung verwiesen, die hier entsprechend gelten.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen
- Figur 1: zeigt schematisch einen erfindungsgemäßen Starter in einer bevorzugten Ausführungsform.
- Figur 2: zeigt schematisch einen Querschnitt einer erfindungsgemäßen Freilaufeinrichtung in einer bevorzugten Ausführungsform.
- Figur 3: zeigt eine Schraubenfeder für eine nicht erfindungsgemäße Freilaufeinrichtung.
- Figur 4: zeigt eine Schnittansicht einer nicht erfindungsgemäßen Freilaufeinrichtung.
- Figur 5: zeigt eine Schraubenfeder für eine erfindungsgemäße Freilaufeinrichtung in einer bevorzugten Ausführungsform.
- Figur 6: zeigt eine Schnittansicht einer erfindungsgemäßen Freilaufeinrichtung in einer bevorzugten Ausführungsform.
- Figur 7: zeigt eine Schnittansicht einer erfindungsgemäßen Freilaufeinrichtung in einer weiteren bevorzugten Ausführungsform.

### Ausführungsform(en) der Erfindung

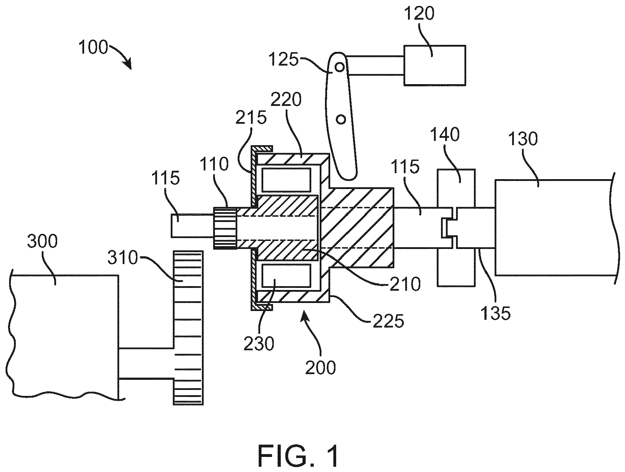

In Figur 1 ist schematisch ein erfindungsgemäßer Starter 100 in einer bevorzugten Ausführungsform dargestellt. Der Starter dient zum Antreiben bzw. Anlassen oder Andrehen einer Brennkraftmaschine 300.

Der Starter 100 weist einen Elektromotor 130 auf, an dessen Welle 135 eine Antriebswelle 115 über ein nicht detaillierter dargestelltes Planetengetriebe 140 drehmomentübertragend gekoppelt ist. An die Antriebswelle 115 ist eine erfindungsgemäße Freilaufeinrichtung 200 in einer bevorzugten Ausführungsform drehmomentübertragend gekoppelt. Insbesondere ist ein Außenring 220 der Freilaufeinrichtung 200, auch als Mitnehmer bezeichnet, mit der Antriebswelle 115 gekoppelt, beispielsweise über ein hier nicht dargestelltes Steilgewinde.

Die Freilaufeinrichtung 200, insbesondere ein Innenring 210 der Freilaufeinrichtung 200, auch als Rollenbund bezeichnet, wiederum weist an einem dem Elektromotor abgewandten Ende eine Außenverzahnung in Form eines Starterritzels 110 auf. Zwischen dem Innenring 210 und dem Außenring 220 der Freilaufeinrichtung 200 sind Klemmrollen 230 angeordnet, die in Bezug auf die noch folgenden Figuren noch näher erläutert werden. Dabei sind axiale Begrenzungselemente 215 und 225 für die Klemmrollen 230 vorgesehen. Während das Begrenzungselement 215 als Haltescheibe oder generell als Scheibe ausgebildet sein kann, die auf dem Außenring montiert ist, wird das Begrenzungselement 225 hier durch den Außenring 220 selbst, insbesondere einen Abschnitt davon, gebildet.

Mittels eines Relais bzw. Magnetschalters 120 und eines nur schematisch angedeuteten Gestänges 125 kann die Freilaufeinrichtung 200 auf der Antriebswelle 115 weg vom Elektromotor 130 (und damit in der Figur nach links) verschoben werden. Auf diese Weise kann das Starterritzel 110 mit einem Zahnkranz 310 der Brennkraftmaschine 300 in Eingriff gebracht werden, um die Brennkraftmaschine 300 anzudrehen.

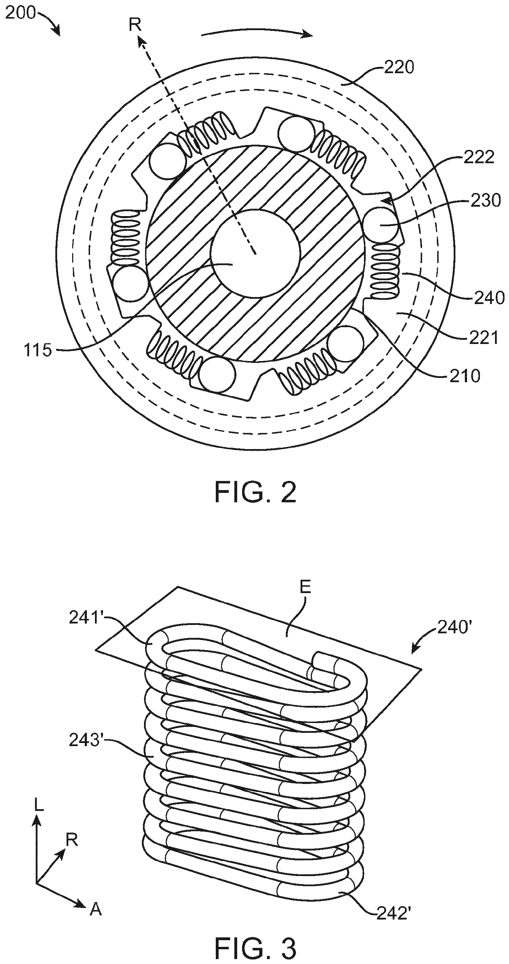

In Figur 2 ist schematisch ein Querschnitt einer erfindungsgemäßen Freilaufeinrichtung 200 in einer bevorzugten Ausführungsform dargestellt. Diese Querschnittsansicht ist dabei senkrecht zur Drehachse der Antriebswelle 115.

Im gezeigten Beispiel sind zwischen dem Innenring 210 und dem Außenring 220 sechs Klemmrollen 230 vorgesehen. Jede dieser Klemmrollen 230 ist in einem zugehörigen Keilspalt 222 eingebracht, welcher durch eine besondere Kontur der Innenseite des Außenrings und der Außenseite des Innenrings gebildet wird. Zudem ist für jede der Klemmrollen 230 eine zugehörige Schraubenfeder 240 vorgesehen, die einerseits jeweils an der Klemmrolle 230 und anderseits jeweils an einem entsprechend in dem Außenring 220 ausgebildeten Vorsprung 221, an dem sie abgestützt ist, anliegt. Mittels der Schraubenfedern 240 wird somit auf die Klemmrollen 230 jeweils eine Kraft in Richtung des sich verjüngenden Endes des Keilspalts 222 ausgeübt.

Dies führt dazu, dass dann, wenn der Außenring 220 in der mittels des nicht näher bezeichneten Pfeils angedeuteten Richtung (in der Figur im Uhrzeigersinn) gedreht und angetrieben wird, der Innenring 210 ebenfalls mitgedreht wird, da sich die Klemmrollen 230 zwischen Innenring 210 und Außenring 220 verklemmen.

Sobald jedoch der Innenring 210 beispielsweise durch die sich drehende Brennkraftmaschine, über welcher er mit dem Starterritzel 110 und dem Zahnkranz 310 gekoppelt ist, eine höhere Drehzahl erreicht als der durch den Elektromotor 130 angetriebene Außenring 220, so löst sich die Verklemmung der Klemmrollen 230, welche dabei gegen die Schraubenfedern 240 gedrückt werden.

In Figur 3 ist nun eine Schraubenfeder 240' für eine nicht erfindungsgemäße Freilaufeinrichtung gezeigt. Mit Ausnahme der Schraubenfedern kann die Freilaufeinrichtung dabei jedoch wie in Bezug auf die Figuren 1 und 2 beschrieben, ausgebildet sein.

Die Schraubenfeder 240' weist in Längsrichtung L mehrere Windungen 243' auf, mit einer oberen Endwindung 214' und einer unteren Endwindung 242'. Die einzelnen Windungen erstrecken sich dabei jeweils (zumindest annähernd) in einer senkrecht auf der Längsrichtung L stehenden Erstreckungsebene E, wie hier beispielhaft für die obere Endwindung 241' angedeutet. Die Form der einzelnen Windungen in der jeweiligen Erstreckungsebene ist dabei oval.

Die Abmessungen der einzelnen Windungen sind dabei in der mit A bezeichneten Richtung, die - wie im Vergleich mit der Figur 2 ersichtlich ist - der axialen Richtung der Freilaufeinrichtung 200 bzw. von Innenring und Außenring entspricht, und in der mit R bezeichneten Richtung, die - wie ebenfalls im Vergleich mit der Figur 2 ersichtlich ist - zumindest im Wesentlichen der radialen Richtung der Freilaufeinrichtung (in Figur 2 ist diese radiale Richtung R ebenfalls gezeigt) entspricht, jeweils gleich groß.

In Bezug auf die Richtung R, die zur Richtung A senkrecht ist, sei angemerkt, dass diese Richtung R nicht notwendigerweise genau mit der radialen Richtung der Freilaufeinrichtung übereinstimmen muss. Dies ist anhand der Figur 2 ersichtlich, da die Schraubenfedern 230 auch etwas verkippt angeordnet werden können.

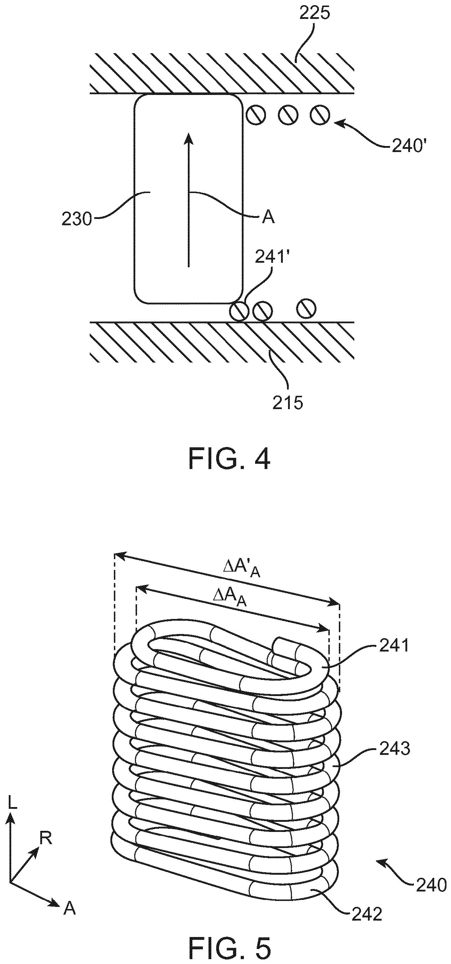

In Figur 4 ist nun eine Schnittansicht einer nicht erfindungsgemäßen Freilaufeinrichtung dargestellt, die eine Schraubenfeder 240', wie in Figur 3 gezeigt, aufweist. Hier ist zum einen zu sehen, dass die Klemmrolle 230 in axialer Richtung A ein Spiel zwischen den Begrenzungselementen 215 und 225 aufweist.

Dadurch wird zwischen dem Begrenzungselement 215 und der Klemmrolle 230 ein Spalt gebildet, in den ein Abschnitt der der Klemmrolle 230 zugewandten Endwindung 241' der Schraubenfeder 240' eindringen kann, wie in der Figur zu sehen. Dies führt, wie eingangs bereits erwähnt, zu unerwünschten Verklemmungen und unerwünschter Abnutzung von Klemmrolle, Schraubenfeder und anliegenden Begrenzungsflächen.

In Figur 5 ist nun eine Schraubenfeder 240 für eine erfindungsgemäße Freilaufeinrichtung in einer bevorzugten Ausführungsform dargestellt. Die Freilaufeinrichtung kann dabei wie in Bezug auf die Figuren 1 und 2 erläutert, ausgebildet sein.

Die Schraubenfeder 240 unterscheidet sich von der in Figur 3 gezeigten Schraubenfeder nun darin, dass hier die obere Endwindung 241 in der Erstreckungsebene in der axialen Richtung A eine kürzere maximale Abmessung ΔA_{A} aufweist als alle anderen Windungen 242, 243, welche eine maximale Abmessung ΔA'_{A} aufweisen. Insbesondere überragen die anderen Windungen 242, 243 die Endwindung 241 auf beiden Enden bzw. Seiten in der axialen Richtung A. Im gezeigten Beispiel beträgt die Abmessung ΔA_{A} etwa 70% der Abmessung ΔA'_{A}.

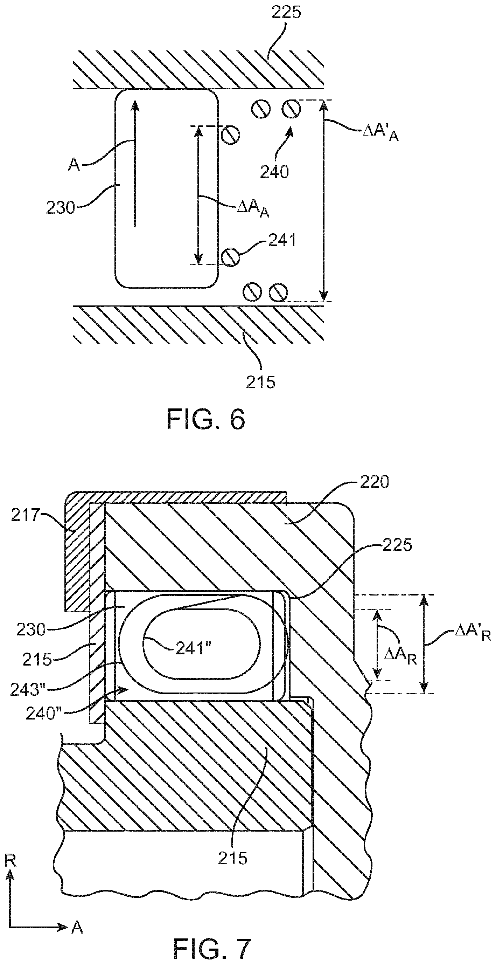

In Figur 6 ist eine Schnittansicht einer erfindungsgemäßen Freilaufeinrichtung in einer bevorzugten Ausführungsform dargestellt. Die Ansicht entspricht dabei derjenigen aus Figur 4, jedoch mit der Schraubenfeder 240 gemäß Figur 5 anstatt mit der Schraubenfeder gemäß Figur 3.

Hier ist nun zu sehen, dass, auch wenn die Schraubenfeder 240 etwas Spiel in axialer Richtung A hat, die der Klemmrolle 230 zugewandte Endwindung 241 nicht an den Begrenzungselementen 215 bzw. 225 anliegt und auch nicht anliegen kann, sodass keine Verklemmung und keine unerwünschte Abnutzung auftreten können.

In Bezug auf die Figuren 5 und 6 sei noch erwähnt, dass es - wie schon erwähnt - auch möglich ist, beide Endwindungen 241 und 242 mit jeweils kürzeren maximalen Abmessungen als die anderen Windungen vorzusehen.

In Figur 7 ist nun eine Schnittansicht einer erfindungsgemäßen Freilaufeinrichtung in einer weiteren bevorzugten Ausführungsform dargestellt. Hier ist im Wesentlichen ein Ausschnitt aus der Freilaufeinrichtung 200 gemäß Figur 1 gezeigt.

Zudem ist hier eine Schraubenfeder 240" im Querschnitt mit einzelnen Windungen schematisch angedeutet. Die Endwindung 241", die hier an der Klemmrolle 230 anliegt, weist sowohl in der axialen als auch in der dazu senkrechten Richtung kürzere maximale Abmessungen als die übrigen Windungen, hier durch die Windung 243" dargestellt, auf. Hier ist insbesondere die in etwa in der radialen Richtung vorgesehene maximale Abmessung ΔA_{R} der Endwindung 241" explizit gegenüber der entsprechenden maximalen Abmessung ΔA'_{R} der Windung 243" dargestellt.. Im gezeigten Beispiel beträgt die Abmessung ΔA_{R} etwa 70% der Abmessung ΔA'_{R}. Die Abmessung in der axialen Richtung entsprechen dabei denjenigen der Schraubenfelder 240' gemäß Figuren 5 und 6.

Durch diese weitere Anpassung der Endwindung, die an der Klemmrolle anliegt, werden auch etwaige Verklemmungen an den der Schraubenfeder zugewandten Flächen bzw. Seiten von Innenring und Außenring mit der Klemmrolle vermieden.

## Patentansprüche

1. Freilaufeinrichtung (200) für einen Starter (100) für eine Brennkraftmaschine (300), mit einem Innenring (210), einem Außenring (220) und einer zwischen dem Innenring (210) und dem Außenring (220) in einem Keilspalt (222) mit einem sich verjüngenden Ende vorgesehenen Klemmrolle (230),
wobei für die Klemmrolle (230) eine Schraubenfeder (240, 240") vorgesehen ist, die in dem Außenring (220) oder dem Innenring abgestützt ist und mittels welcher eine Kraft auf die Klemmrolle (230) in Richtung des sich verjüngenden Endes des Keilspalts (222) ausübbar ist, und
wobei die Klemmrolle (230) und die Schraubenfeder (240) in axialer Richtung (A) in Bezug auf den Innenring (210) und den Außenring (220) zwischen zwei Begrenzungselementen (215, 225) eingebracht sind, wobei die Klemmrolle (230) ein Spiel in axialer Richtung (A) in Bezug auf den Innenring (210) und den Außenring (220) aufweist,
**dadurch gekennzeichnet, dass** bei der Schraubenfeder (240, 240") eine maximale Abmessung (ΔA_{A}, ΔA_{R}) wenigstens einer der Klemmrolle (230) zugewandten Endwindung (241, 241") in einer Erstreckungsebene (E) der Endwindung in einer axialen Richtung (A) in Bezug auf den Innenring (210) und den Außenring (220) und/oder einer dazu senkrechten Richtung (R) kürzer ist als eine entsprechende maximale Abmessung (ΔA'_{A}, ΔA'_{R}) wenigstens einer anderen Windung (243, 243") der Schraubenfeder.

2. Freilaufeinrichtung (200) nach Anspruch 1, wobei bei der Schraubenfeder (240, 240") die maximale Abmessung (ΔA_{A}, ΔA_{R}) der wenigstens einen der Klemmrolle (230) zugewandten Endwindung (241, 241") in der Erstreckungsebene (E) in der axialen Richtung (A) und/oder der dazu senkrechten Richtung (R) höchstens 90%, bevorzugt höchstens 80%, besonders bevorzugt höchstens 75%, der entsprechenden maximalen Abmessung (ΔA'_{A}, ΔA'_{R}) der wenigstens einen anderen Windung (243, 243") der Schraubenfeder beträgt.

3. Freilaufeinrichtung (200) nach Anspruch 1 oder 2, wobei bei der Schraubenfeder (240") die maximale Abmessung (ΔA_{A}, ΔA_{R}) wenigstens der der Klemmrolle (230) zugewandten Endwindung (241") in der Erstreckungsebene (E) in der axialen Richtung (A) und in der dazu senkrechten Richtung (R) kürzer ist als eine entsprechende maximale Abmessung (ΔA'_{A}, ΔA'_{R}) der wenigstens einen anderen Windung (243") der Schraubenfeder.

4. Freilaufeinrichtung (200) nach einem der vorstehenden Ansprüche, wobei bei der Schraubenfeder (240, 240") wenigstens die der Klemmrolle (230) zugewandte Endwindung (241, 241") in der Erstreckungsebene (E) in der axialen Richtung (A) und/oder in der dazu senkrechten Richtung (R) an jeweils beiden Seiten von der wenigstens einen anderen Windung (243, 243") der Schraubenfeder überragt wird.

5. Freilaufeinrichtung (200) nach einem der vorstehenden Ansprüche, wobei die Schraubenfeder (240") zwischen den Begrenzungselementen (215, 225) mit oder ohne Spiel angeordnet ist.

6. Freilaufeinrichtung (200) nach einem der vorstehenden Ansprüche, wobei bei der Schraubenfeder (240, 240") die maximalen Abmessungen (ΔA'_{A}, ΔA'_{R}) aller Windungen (243, 242") außer den Endwindungen in der Erstreckungsebene (E) in axialer Richtung (A) und/oder der dazu senkrechten Richtung (R) jeweils gleich sind.

7. Freilaufeinrichtung (200) nach einem der vorstehenden Ansprüche, wobei bei der Schraubenfeder (240") die maximale Abmessung (ΔA_{A}, ΔA_{R}) der der Klemmrolle (230) zugewandten Endwindung (241") und der der Klemmrolle (230) abgewandten Endwindung in der Erstreckungsebene (E) in der axialen Richtung (A) und/oder der dazu senkrechten Richtung (R) kürzer ist als die entsprechende maximale Abmessung der wenigstens einen anderen Windung (243") der Schraubenfeder.

8. Freilaufeinrichtung (200) nach einem der vorstehenden Ansprüche, wobei die Windungen (241, 242, 243, 241", 243") der Schraubenfeder (240, 240") in der Erstreckungsebene (E) eine elliptische oder superelliptische Form aufweisen.

9. Freilaufeinrichtung (200) nach einem der vorstehenden Ansprüche, wobei bei der Schraubenfeder (240, 240") die maximale Abmessung (ΔA_{A}, ΔA_{R}) wenigstens der der Klemmrolle (230) zugewandten Endwindung (241, 241") in der Erstreckungsebene (E) in der axialen Richtung (A) und/oder in der dazu senkrechten Richtung (R) kürzer ist als eine entsprechende maximale Abmessung der zugehörigen Klemmrolle (230).

10. Starter (100) für eine Brennkraftmaschine (300) mit einer Freilaufeinrichtung (200) nach einem der vorstehenden Ansprüche.

11. Starter (100) nach Anspruch 10, mit einem Elektromotor (130), mittels dessen der Außenring (220) der Freilaufeinrichtung (200) antreibbar ist, und mit einem Starterritzel (110), das mit dem Innenring (210) verbundenen oder gekoppelt ist.
